(19) Europäisches Patentamt
European Patent Office
Office européen des brevets

(11) Publication number: 0 210 016 B1

(12) # EUROPEAN PATENT SPECIFICATION

(45) Date of publication of patent specification: **22.01.92**

(51) Int. Cl.[5]: **C08F 4/48**, C08F 36/04, C08F 12/04

(21) Application number: **86305238.7**

(22) Date of filing: **07.07.86**

The file contains technical information submitted after the application was filed and not included in this specification

(54) **Polymerization process and initiator system therefor.**

(30) Priority: **12.07.85 US 754329**

(43) Date of publication of application: **28.01.87 Bulletin 87/05**

(45) Publication of the grant of the patent: **22.01.92 Bulletin 92/04**

(84) Designated Contracting States: **BE DE FR GB IT NL SE**

(56) References cited:
**FR-A- 1 492 154**
**US-A- 4 196 154**
**US-A- 4 205 016**

(73) Proprietor: **THE DOW CHEMICAL COMPANY**
**2030 Dow Center Abbott Road P.O. Box 1967**
**Midland Michigan 48640-1967(US)**

(72) Inventor: **Tung, Lu Ho**
**401 Hunters Ridge**
**Midland Michigan 48640(US)**
Inventor: **Griggs, Jerald Allen**
**2805 Dawn Drive**
**Midland Michigan 48640(US)**

(74) Representative: **Raynor, John**
**W.H. Beck, Greener & Co 7 Stone Buildings**
**Lincoln's Inn**
**London WC2A 3SZ(GB)**

EP 0 210 016 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

Telechelic and block copolymers are well known in the art and are employed for a variety of purposes. As block copolymers one of the more interesting varieties is of the configuration $A(BA)_n$ wherein n has a value of from about 1-10. One of the more interesting of block copolymers of this variety is that obtained when n is 1, or the block copolymer has a simple ABA configuration. Such block copolymers are often prepared to have a polystyrene-polybutadiene-polystyrene configuration; the A blocks may be homopolymers or copolymers. Usually the B block is an elastomer such as a butadiene polymer or an isoprene polymer segment. To obtain block copolymers of maximum uniformity, it is usually desirable to inititate polymerization employing a multifunctional lithium compound. In the case of an ABA block copolymer, a difunctional compound would be employed. In the case of an $A(BA)_3$ block copolymer, a tetrafunctional initiator would be utilized. Generally, the multifunctional lithium containing initiators do not initiate as rapidly as smaller monofunctional compounds, and the polymerization product has a broader molecular weight range than is often desired. If it were possible to prepare block copolymers having very narrow molecular weight distribution which are often desirable for some applications, one could then blend such narrow molecular weight distribution block copolymers to obtain a product having almost any desired molecular weight distribution.

FR-A-1492154 discloses a process for preparing oligomers using a combination of reagents which changes the microstructure of the dienes used in the polymerizations. Mention is made in this reference of the use of dilithiostilbene as a possible initiator, but no specific example is given of using dilithiostilbene. This is not surprising, because it is well known generally in the art that dilithiostilbene requires the use of a polar solvent as shown, for example, in US Patent 3392202. Dilithiostilbene is thus not suitable for use in anionic polymerisation.

Dilithium initiators are disclosed in US Patent 4205016. However, there is no suggestion in this reference of the use of such initiators for providing block copolymers having a narrow molecular weight distribution.

This invention provides an improved process for the preparation of block copolymers of the $A(BA)_n$ variety which have a narrow molecular weight distribution.

The invention also provides an initiator system which produces such polymers having a narrow molecular weight distribution.

These benefits and other advantages in accordance with the present invention are achieved in a solution polymerization of at least one anionically polymerizable monomer wherein polymerization of the monomer is initiated in the presence of a multifunctional lithium containing soluble initiator compound to initiate polymerization and subsequently polymerize the anionically polymerizable monomer, the improvement which comprises employing as initiator system a mixture of a particular multifunctional lithium compound and a lithium alkoxide, the lithium alkoxide containing 1-16 carbon atoms and the equivalent ratio of alkoxide to multi-functional lithium compound being from about 0.05 to 2.

Also contemplated in the scope of the present invention is a polymerization initiator system comprising a hydrocarbon solvent, a particular multifunctional lithium containing polymerization initiator and a lithium alkoxide containing 1 to 16 carbon atoms wherein the equivalent ratio of alkoxide to multifunctional lithium compound is from 0.05 to 2.

The multifunctional lithium containing compounds employed in the present invention have the formula:

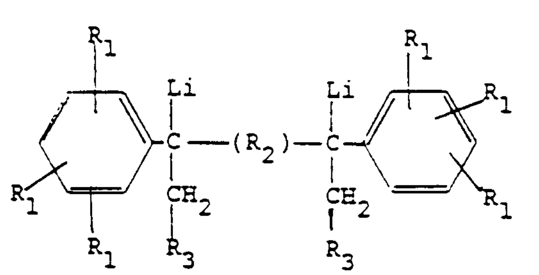

wherein

each $R_1$, independently contains from 0 to 16 carbon atoms and is hydrogen, an alkyl radical, a cycloalkyl radical, an alkoxy radical, or an aromatic, preferably aromatic hydrocarbon, radical;

$R_2$ is a divalent organic radical containing carbon, hydrogen and optionally oxygen and having at least 6 carbon atoms, at least one aromatic ring which is directly attached to a carbon which is attached to an

aromatic ring of the above formula; oxygen when present is present only in the configuration of a diphenyl oxide;

each $R_3$ independently represents an alkyl, cycloalkyl, or aromatic, preferably aromatic hydrocarbon, radical containing from 1 to 20 carbon atoms.

Preferred such components have the formula

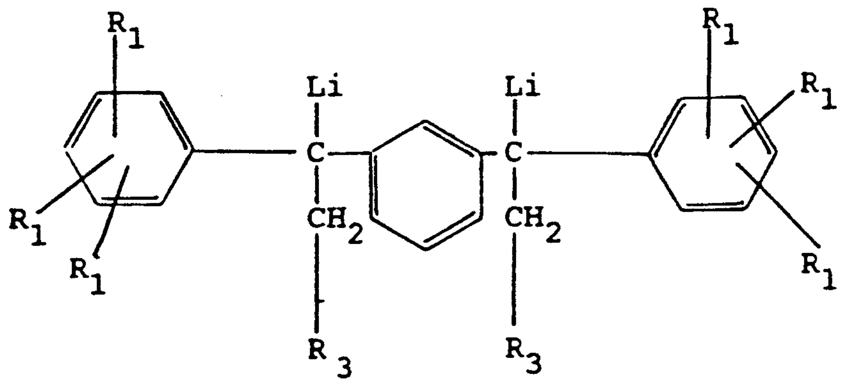

wherein $R_1$ and $R_3$ have the same definition as above.

Polydiene monomers suitable for use in the practice of the present invention include conjugated dienes, for example, 1,3-butadiene, isoprene and mixtures thereof.

Advantageously alkenyl aromatic monomers are also employed. By the term alkenyl aromatic monomer is meant a monomer of the formula:

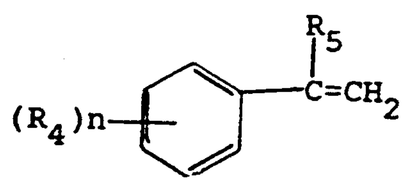

where n is 0 or an integer from 1 to 3, each $R_4$ independantly is an alkyl radical containing up to 5 carbon atoms and $R_5$ is hydrogen or methyl. Preferred alkenyl aromatic monomers include styrene, vinyltoluene, (all isomers alone or in admixture); particularly desirable is paravinyltoluene, or -methyl styrene.

Solvents useful for the practice of the present invention include hydrocarbons, both aliphatic and aromatic, as well as cycloaliphatic and include hexane, benzene, toluene, cyclohexane and in some instances a monomer can be employed also as a solvent, such as in the case of alphamethylstyrene.

Lithium alkoxides suitable for the practice of the present invention are readily prepared by the reaction of an alkyl lithium compound with an aliphatic alcohol having from 1 to 16, preferably 3 to 8, carbon atoms. Such alcohols may be monohydric or polyhydric and include methanol, ethanol, isopropyl alcohol, ethylene glycol and the like. Generally it is desirable to prepare the lithium alkoxide in solution, using an alkyl lithium compound as the lithium donor and a solvent compatible with the solvent used in the polymerization. The alkoxide may be prepared at any convenient temperature up to the polymerization temperature.

The multifunctional lithium compound and the lithium alkoxide may be combined at any time prior to initiation of polymerization. Generally, the equivalent ratio of alkoxide to the polylithium compound is from 0.05 to 2 and advantageously from 0.1 to 1.

Advantageously the lithium alkoxide can be made in the hydrocarbon solution of an organolithium compound, such as n-butyllithium by addition of the appropriate alcohol thereto.

The invention is further illustrated by the following examples.

Example 1

A nitrogen purged 2-liter air-tight stirred reactor was charged with 1350 milliliters of alphamethylstyrene and 0.78 milliequivalents of isopropyl alcohol. The alphamethylstyrene isopropyl alcohol mixture was blanked with 2.3 milliequivalents of secondary butyllithium to produce lithium isopropoxide in the alphamethylstyrene solution. After the blanking step, 12 grams of styrene and 177 grams of isoprene were added to the reactor. The heating jacket of the reactor was set at a temperature of 45° Centigrade. When the temperature of the reaction mixture reached 39° C 1.78 millimoles or 3.56 milliequivalents of 1,3-phenylene-bis(3-methyl-1-phenylpentylidene)bis-(lithium), were added. The equivalent ratio of the alkoxide to dilithium compound was 0.22. After the addition of the dilithium compound, the jacket control setting was raised to 50° C. After a period of about 35 minutes, the reaction mixture turned a deep red. The temperature setting was then raised to 60° C and polymerization continued for an additional 25 minutes.

Polymerization was terminated by the addition of isopropylalcohol. The resulting polymer was an isoprene triblock with a center block of polyisoprene, and end blocks of styrene-alpha-methylstyrene polymer. The molecular weight was determined employing gel permeation chromatography. The chromatogram showed a single peak and indicated a weight average molecular weight of 213,800 and an apparent weight average molecular weight to number average average molecular weight ratio of 1.14.

For purposes of comparison the foregoing was repeated with the following exceptions: No isopropyl alcohol was added prior to blanking and the quantity of difunctional initiator was 1.79 millimoles rather than 1.78. On examination of the polymer by gel permeation chromatography, 2 peaks were observed with the main peak indicating a weight average molecular weight of 185,900 and an apparent weight average molecular weight to number average molecular weight ratio of 1.23.

Example 2

The procedure of Example 1 was repeated with the exception that the dilithio initiator was 1,3-phenylene-bis(3-methyl-1,[4-methylphenyl]pentylidene)bis(lithium). 0.78 milliequivalents of lithium isopropoxide was generated in the reaction mixture to give an equivalent ratio of the alkoxide to dilithium compound of 0.22. The recovered polymer showed a single peak in the gel permeation chromatograph indicating weight average molecular weight of 239,100 and an apparent weight average molecular weight to number average molecular weight ratio of 1.17.

For purposes of comparison the foregoing procedure was repeated with the exception that no isopropyl alcohol was added to the reaction mixture until termination. The triblock polymer had a weight average molecular weight of 293,100 as indicated by the peak of the gel permeation chromatography and an apparent weight average molecular weight to number average molecular weight ratio of 1.27.

Example 3

A 1-liter nitrogen purged round bottom glass reactor was charged with 400 milliliters of toluene and 34 grams of isoprene. The mixture was heated to 50° C and 1.24 millimoles of 1,3-phenylene-bis(3-methyl-1-phenylpentylidene)bis-(lithium) with lithium isopropoxide in toluene was added as an initiator. The equivalent ratio of isopropoxide to the lithium compound was 0.11. At one hour and 45 minutes after the addition of the initiator, the reaction was terminated by the addition of glacial acetic acid. Polyisoprene was the product which had a weight average molecular weight as determined by gel permeation chromatography 53,000 and a weight average and a number average molecular weight ratio of 1.35. The gel permeation chromatogram indicated 2 peaks.

For comparative purposes the foregoing procedure was repeated with the exception that no lithium isopropoxide was employed. The resultant product had a weight average molecular weight of 64,300. The weight average molecular weight to number average molecular weight ratio was 1.50, and the gel permeation chromatogram contained 2 peaks spaced further apart than that obtained when employing the lithium isopropoxide.

When the foregoing procedure without lithium isopropoxide was repeated using butadiene in place of isoprene, the resulting polymer had a weight average molecular weight of 51,100. The molecular weight average to number average molecular weight ratio was 1.54 and 2 distinct peaks were observed in the gel permeation chromatogram.

Example 4

The procedure of Example 3 was repeated except that the equivalent ratio of lithium isopropoxide to the dilithium compound was 0.21. The polyisopropene recovered had a weight average molecular weight of 42,300, the weight average molecular weight to number average molecular weight ratio was 1.30 and the gel permeation chromatography chromatogram showed only a single peak.

Example 5

The procedure of Example 3 was repeated except that the equivalent ratio in the initiator was 0.50. The product recovered had a weight average molecular weight of 41,200. The gel permeation chromatography chromatogram indicated only a single peak and the weight average molecular weight to number average molecular weight ratio was 1.19.

Example 6

The procedure of Example 3 was repeated with the exception that the equivalent ratio of dilithium compound in the initiator to alkoxide was 1.01. The resultant polyisoprene had a weight average molecular weight of 44,000 and the gel permeation chromatography showed only 1 peak. The weight average molecular weight to number average molecular weight ratio was 1.24.

Example 7

The procedure of Example 3 was repeated with the exception that lithium tertiary-butoxide was employed in place of lithium isopropoxide. The polyisopropene recovered had a molecular weight of 55,500. The molecular weight average to number molecular weight average ratio was 1.35. The gel permeation chromatogram indicated 2 peaks which were closer together than the peaks obtained in the comparative experiment in Example 3.

Example 8

The procedure of Example 3 was repeated with the exception that lithium octanoxide was employed in place of lithium isopropoxide. The polyisoprene recovered had a weight average molecular weight of 51,100. The weight average molecular weight to number molecular weight average ratio was 1.45. The gel permeation chromatograph indicated 2 peaks. However, the peaks were closer together than that obtained in the comparative process of Example 3.

Example 9

The procedure of Example 5 was repeated with the exception that butadiene was employed instead of isoprene. The resultant polybutadiene had a weight average molecular weight of 30,100. The molecular weight average to number molecular weight average ratio was 1.09 and only a single peak was observed on the gel permeation chromatogram.

**Claims**

**1.** A method of solution polymerising at least one anionically polymerizable monomer wherein polymerization of the monomer is initiated in the presence of a soluble initiator containing a multifunctional organo lithium compound characterized by employing as initiator a mixture containing a lithium alkoxide containing 1-16 carbon atoms and a multifunctional lithium compound of the formula:

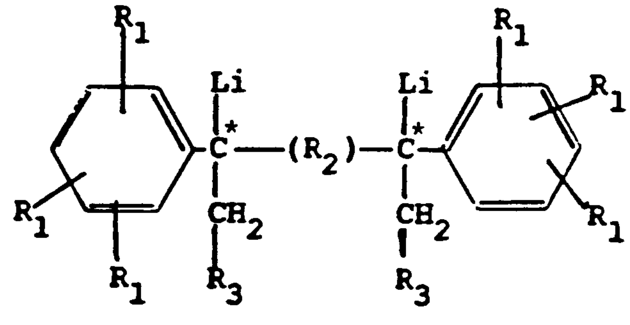

wherein

each $R_1$, independantly contains from 0 to 16 carbon atoms and is hydrogen, an alkyl radical, a cycloalkyl radical, an alkoxy radical, or an aromatic radical;

$R_2$ is a divalent organic radical, containing carbon, hydrogen and optionally oxygen and having at least 6 carbon atoms, comprising at least one aromatic ring which is directly attached to one of the carbon atoms marked * in the above formula; oxygen when present is present only in the configuration of a diphenyl oxide;

each $R_3$ independantly represents an alkyl, cycloalkyl, or aromatic radical containing from 1 to 20 carbon atoms,

wherein the equivalent ratio of alkoxide to multifunctional lithium compound is from 0.05 to 2

2. A method as claimed in Claim 1, wherein the multifunctional lithium compound has the formula:

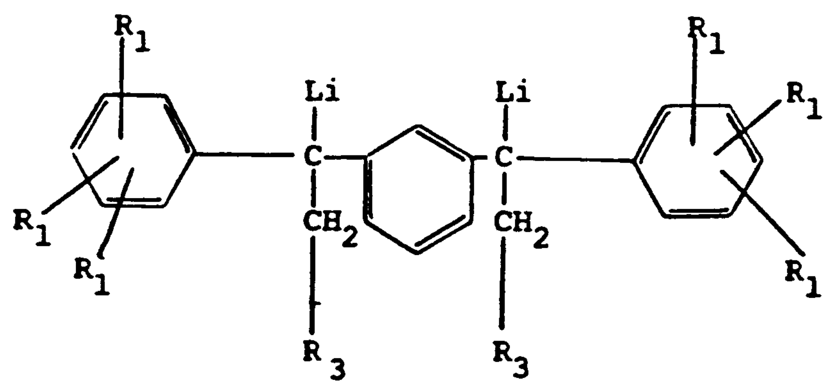

wherein the $R_1$ and $R_3$ are both as defined in Claim 1.

3. A method as claimed in Claim 1 or Claim 2 wherein the anionically polymerizable monomer is an alkenyl aromatic monomer of the formula:

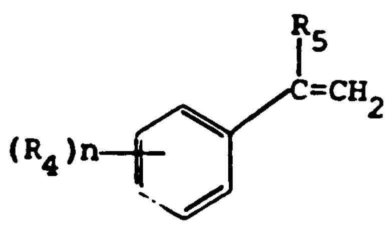

where n is 0 or an integer from 1 to 3, each $R_4$ independantly is an alkyl radical containing up to 5 carbon atoms and $R_5$ is hydrogen or methyl.

4. A method as claimed in any one of Claims 1 to 3 wherein the anionically polymerizable monomer is a conjugated diene.

5. A method as claimed in Claim 4, wherein the monomer is butadiene.

6. A method as claimed in Claim 4, wherein the monomer is isoprene.

7. A method as claimed in any of Claims 1 to 3, wherein styrene and alpha-methylstyrene are utilized as monomers.

8. A polymerization initiator system comprising a hydrocarbon solvent, a lithium alkoxide containing 1 to 16 carbon atoms, and a multifunctional lithium-containing polymerization initiator of the formula:-

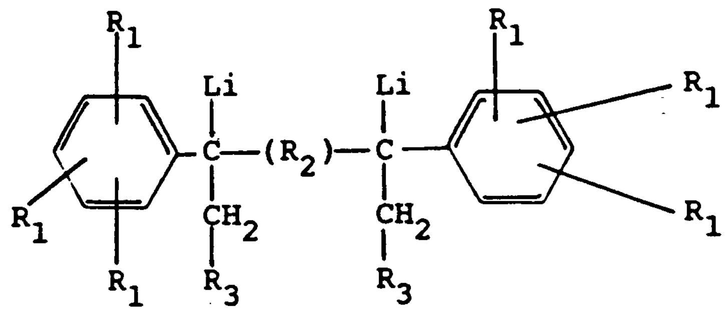

wherein $R_1$, $R_2$ and $R_3$ are as defined above in Claim 1 and wherein the equivalent ratio of alkoxide to multifunctional lithium compound is from 0.05 to 2.

**9.** A polymerization initiator system as claimed in Claim 8 wherein the multifunctional lithium-containing initiator has the formula:

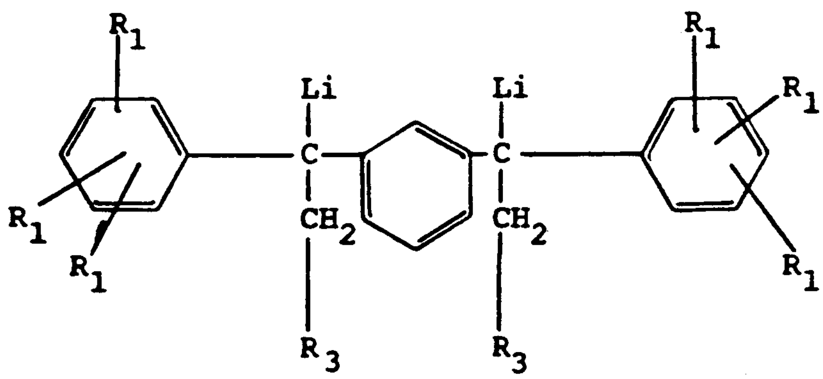

wherein $R_1$ and $R_3$ are both as defined in Claim 8.

**10.** An initiator system as claimed in Claim 8 or Claim 9 wherein the lithium alkoxide is lithium isopropoxide.

**Revendications**

**1. Procédé** de polymérisation en solution d'au moins un monomère polymérisable de manière anionique, dans lequel la polymérisation du monomère est initiée en présence d'un initiateur soluble contenant un composé organolithium à fonctions multiples caractérisé par l'emploi comme initiateur d'un mélange contenant un alkoxyde de lithium contenant de 1 à 16 atomes de carbone et un composé de lithium à fonctions multiples de formule :

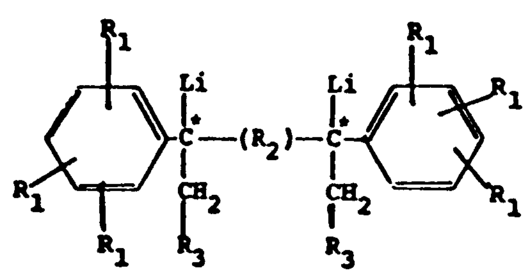

dans laquelle

chaque $R_1$ contient indépendamment de 0 à 16 atomes de carbone et est l'hydrogène, un radical alkyle, un radical cycloalkyle, un radical alkoxy ou un radical aromatique;

$R_2$ est un radical organique divalent contenant du carbone, de l'hydrogène et éventuellement de l'oxygène et comportant au moins 6 atomes de carbone, comprenant au moins un **cycle** aromatique qui est directement attaché à l'un des atomes de carbone marqués * dans la formule ci-dessus; l'oxygène lorsqu'il est présent n'étant présent que dans la configuration d'un oxyde de diphényle ;

chaque $R_3$ représente indépendamment un radical alkyle, cycloalkyle ou aromatique contenant de 1 à 20 atomes de carbone,

dans lequel le rapport équivalent entre l'alkoxyde et le composé de lithium à fonctions multiples est compris entre 0, 05 et 2.

2. **Procédé** selon la revendication 1, dans lequel le composé de lithium à fonctions multiples est de la formule :

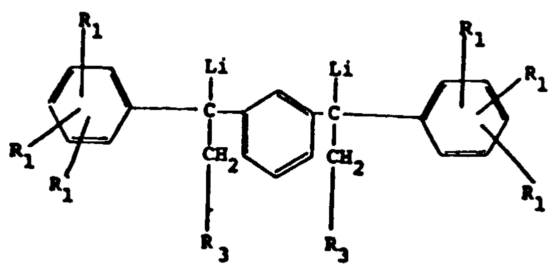

où $R_1$ **et** $R_3$ sont tous deux comme définis dans la revendication 1.

3. **Procédé** selon la revendication 1 ou la revendication 2, dans lequel le monomère polymérisable de manière anionique est un monomère aromatique d'alkényle de la formule :

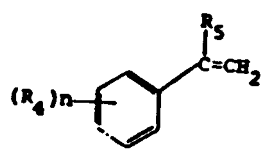

où n est 0 ou un entier compris entre 1 et 3, chaque $R_4$ est indépendamment un radical alkyle contenant jusqu'à 5 atomes de carbone et $R_5$ est l'hydrogène ou le méthyle.

4. **Procédé** selon l'une **des** revendications 1 à 3, dans lequel le monomère polymérisable de manière anionique est un diène conjugué.

5. **Procédé** selon la revendication 4, dans lequel le monomère est du butadiène.

6. **Procédé** selon la revendication 4, dans lequel le monomère est de l'isoprène.

7. **Procédé** selon l'une **des** revendications 1 à 3, dans lequel le styrène et l'alpha-méthylstyrène sont utilisés comme monomères.

8. **Système** initiateur de polymérisation comprenant un solvant d'hydrocarbure, un alkoxyde de lithium contenant de 1 à 16 atomes de carbone, et un initiateur de polymérisation contenant du lithium à fonctions multiples de la formule :

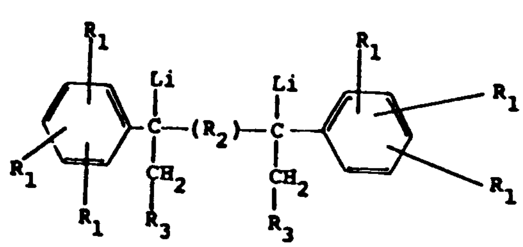

dans laquelle $R_1$, $R_2$ et $R_3$ ont la même signification que dans la revendication 1 et dans laquelle le rapport en équivalents entre l'alkoxyde et le composé du lithium à fonctions multiples est compris entre 0,05 et 2.

9. **Système** initiateur de polymérisation selon la revendication 8 dans lequel l'initiateur contenant du lithium à fonctions multiples est de la formule :

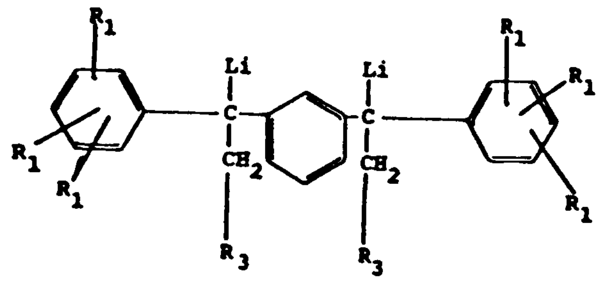

dans laquelle $R_1$ et $R_3$ ont tous deux la même signification que dans la revendication 8.

10. **Système** initiateur selon la revendication 8 ou la revendication 9 dans lequel l'alkoxyde de lithium est de l'isopropoxyde de lithium.

**Patentansprüche**

1. Verfahren zum Polymerisieren in Lösung von mindestens einem anionisch polymerisierbaren Monomer, wobei die Polymerisation des Monomeren in Gegenwart eines löslichen Initiators, der eine multifunktionelle Organo-Lithiumverbindung enthält, eingeleitet wird,
**gekennzeichnetdurch**
Verwenden einer Initiatormischung, enthaltend ein Lithiumalkoxid mit 1-16 Kohlenstoffatomen und eine multifunktionelle Lithiumverbindung der Formel

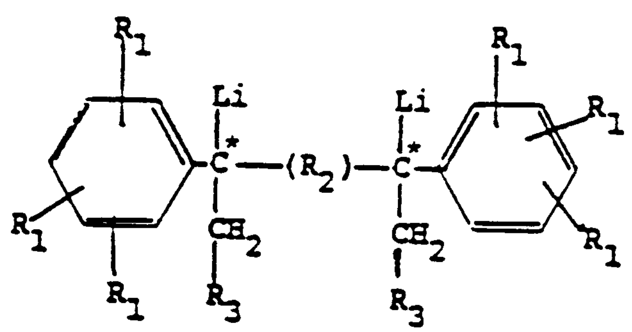

in der
$R_1$ unabhängig von 0-16 Kohlenstoffatome aufweist und Wasserstoff, ein Alkylrest, ein Cycloalkylrest, eine Alkoxyrest oder ein aromatischer Rest ist,
$R_2$ ein zweiwertiger organischer Rest ist, der Kohlenstoff, Wasserstoff und gegebenenfalls Sauerstoff enthält und mindestens 6 Kohlenstoffatome aufweist, enthaltend mindestens einen aromatischen Ring, der direkt an eines der in der Formel mit einem Stern markierten Kohlenstoffatome gebunden ist, wobei Sauerstoff, wenn vorhanden, nur in der Konfiguration eines Diphenyloxides vorhanden ist,
jedes $R_3$ unabhäng ein Alkylrest, Cycloalkylrest oder aromatischer Rest mit 1-20 Kohlenstoffatomen ist, wobei das Äquivalentverhältnis von Alkoxid zu multifunktioneller Lithiumverbindung von 0,05 bis 2 beträgt.

2. Verfahren nach Anspruch 1,
**dadurchgekennzeichnet**,
daß die multifunktionelle Lithiumverbindung die Formel aufweist:

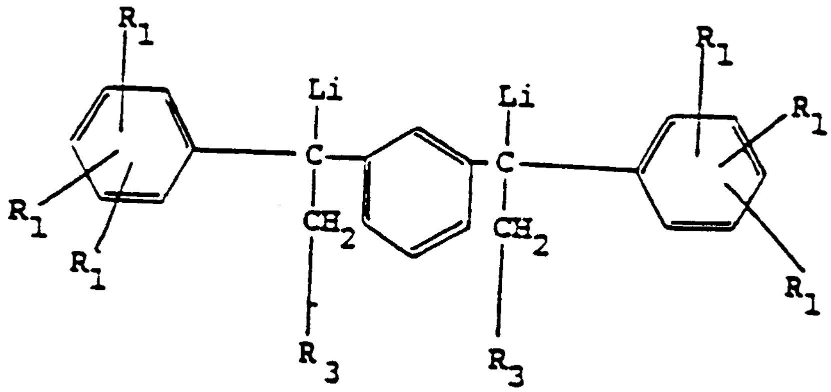

in der $R_1$ und $R_3$ die in Anspruch 1 angegebene Bedeutung haben.

3. Verfahren nach Anspruch 1 oder Anspruch 2, **dadurchgekennzeichnet**, daß das anionisch polymerisierbare Monomer ein alkenylaromatisches Monomer der Formel ist:

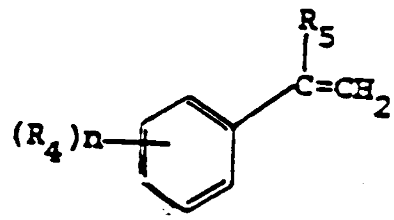

in der n 0 oder eine ganze Zahl von 1 bis 3 ist, jedes $R_4$ unabhängig ein bis zu 5 Kohlenstoffatome enthaltender Alkylrest ist und $R_5$ Wasserstoff oder Methyl ist.

4. Verfahren nach jedem der Ansprüche 1 bis 3, **dadurchgekennzeichnet**, daß das anionisch polymerisierbare Monomer ein konjugiertes Dien ist.

5. Verfahren nach Anspruch 4, **dadurchgekennzeichnet**, daß das Monomer Butadien ist.

6. Verfahren nach Anspruch 4, **dadurchgekennzeichnet**, daß das Monomer Isopren ist.

7. Verfahren nach jedem der Ansprüche 1 bis 3, **dadurchgekennzeichnet**, daß Styrol und Alpha-Methylstyrol als Monomere verwendet werden.

8. Polymerisationsinitiatorsystem, enthaltend ein Kohlenwasserstofflösemittel, ein 1-16 Kohlenstoffatome enthaltendes Lithiumalkoxid und einen multifunktionellen Lithium-haltigen Polymerisationsinitiator der Formel:

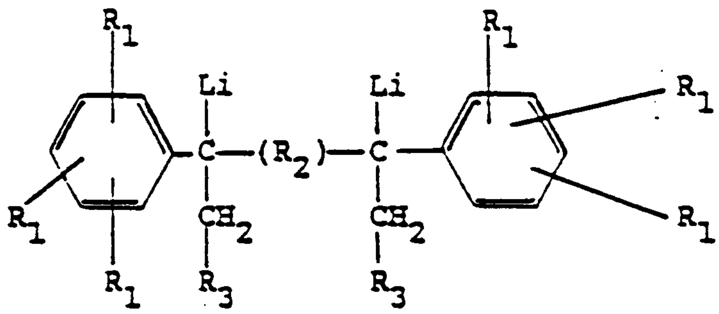

in der $R_1$, $R_2$ und $R_3$ die in Anspruch 1 angegebene Bedeutung haben und wobei das Äquivalentverhältnis von Alkoxid zu multifunktioneller Lithiumverbindung von 0,05 bis 2 beträgt.

**9.** Polymerisationsinitiatorsystem nach Anspruch 8,
**dadurchgekennzeichnet**,
daß die multifunktionelle, Lithium enthaltende Verbindung die Formel aufweist:

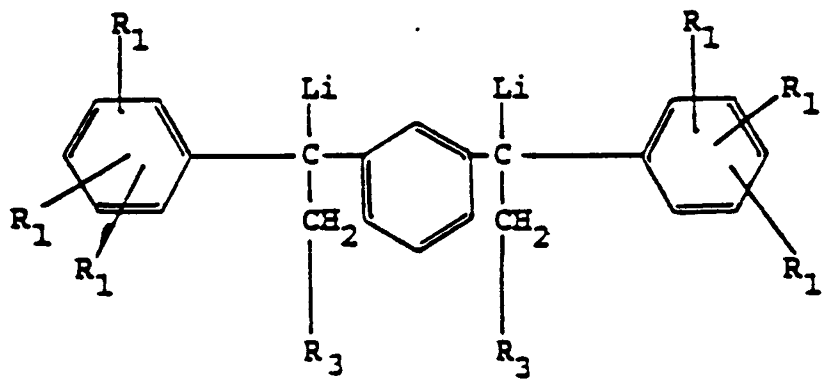

in der $R_1$ und $R_3$ beide die in Anspruch 8 angegebene Bedeutung haben.

**10.** Initiatorsystem nach Anspruch 8 oder Anspruch 9,
**dadurchgekennzeichnet**,
daß das Lithiumalkoxid Lithiumisopropoxid ist.